# EUROPEAN PATENT APPLICATION

(11) **EP 3 693 213 A1**
(43) Date of publication of application: **12.08.2020**
(21) Application number: 19177409.0
(22) Date of filing: 29.05.2019
(51) Int. Cl.: B60N 2/853, B60N 2/888, B60N 2/865, B60N 2/85, B60N 2/02

(54) **ELECTRIC POWER ACTUATION TILTING HEAD RESTRAINT WITH AUTOMATED DEPLOYMENT**

(30) Priority: 05.02.2019 US 201962801287 P; 16.04.2019 US 201916385765
(71) Applicant: Windsor Machine and Stamping 2009 Ltd, Windsor, Ontario N9H 2N2 (CA)
(72) Inventor: Little, Mark, Windsor, Ontario N9H 2N2 (CA); Angelo, Collins, Windsor, Ontario N9H 2N2 (CA)
(74) Representative: Manitz Finsterwald Patent- und Rechtsanwaltspartnerschaft mbB

(57) **Abstract**

A power actuated tilting head restraint assembly includes a head restraint (32) mountable to a vehicle seat. The assembly also includes a power actuation assembly including an electric motor (40) to adjust a rotational position of the head restraint (32), the electric motor (40) programmed to adjust the rotational position at a first speed during manual adjustment of the head restraint and at a second speed upon detection of an imminent impact by an impact detection system, the second speed greater than the first speed.

## Description

### BACKGROUND OF THE INVENTION

This application claims priority to U.S. Provisional Patent Application Serial No. 62/801,287, filed February 5, 2019, the disclosure of which is incorporated herein by reference in its entirety.

### FIELD OF THE INVENTION

The subject matter disclosed herein relates to vehicle head restraints and, more particularly, to a tilting vehicle head restraint that is automatically deployable.

### BACKGROUND OF THE INVENTION

Many vehicles, such as automobiles, include a head restraint (also may be referred to as a headrest) atop an occupant's seat and in a position adjacent the occupant's head. Head restraints are typically cushioned for comfort, are height adjustable, and most are commonly finished in the same material as the rest of the seat. Design and assembly of head restraints require consideration of assembly structural integrity. Several challenges are involved with ensuring the desired structural integrity.

Movement of head restraints to reposition them to a desired location typically requires manual manipulation of the head restraints. A less cumbersome adjustment capability is desirable. Additionally, the adjusted position of the head restraint may impact the safety effectiveness of the head restraint during an excessive vehicle acceleration or deceleration event.

### BRIEF DESCRIPTION OF THE INVENTION

According to one aspect of the disclosure, a power actuated tilting head restraint assembly is provided. The assembly includes a head restraint mountable to a vehicle seat. The assembly also includes a power actuation assembly including an electric motor to adjust a rotational position of the head restraint, the electric motor programmed to adjust the rotational position at a first speed during manual adjustment of the head restraint and at a second speed upon detection of an imminent impact by an impact detection system, the second speed greater than the first speed.

According to another aspect of the disclosure, a method of automatically deploying a power actuated tilting head restraint assembly is provided. The method includes monitoring surroundings of a vehicle with an impact detection system. The method also includes determining an imminent impact with the impact detection system. The method further includes automatically adjusting a rotatable head restraint with an electric motor at a actuation speed that is greater than a manual adjustment speed of the electric motor.

These and other advantages and features will become more apparent from the following description taken in conjunction with the drawings.

### BRIEF DESCRIPTION OF THE DRAWING

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a perspective view of a head restraint in a first position;
FIG. 2 is a perspective view of the head restraint in a second position;
FIG. 3 is a side, elevational view of the head restraint with a portion of a cover removed;
FIG. 4 is a disassembled view of a portion of the head restraint;
FIG. 5 is a side, elevational view of the head restraint in a first position just prior to automated deployment to a second position;
FIG. 6 is a side, elevational view of the head restraint illustrating the second position of the head restraint after automated deployment; and
FIG. 7 is a schematic representation of a collision detection system over an elapsed time frame.

The detailed description explains embodiments of the invention, together with advantages and features, by way of example with reference to the drawings.

### DETAILED DESCRIPTION OF THE INVENTION

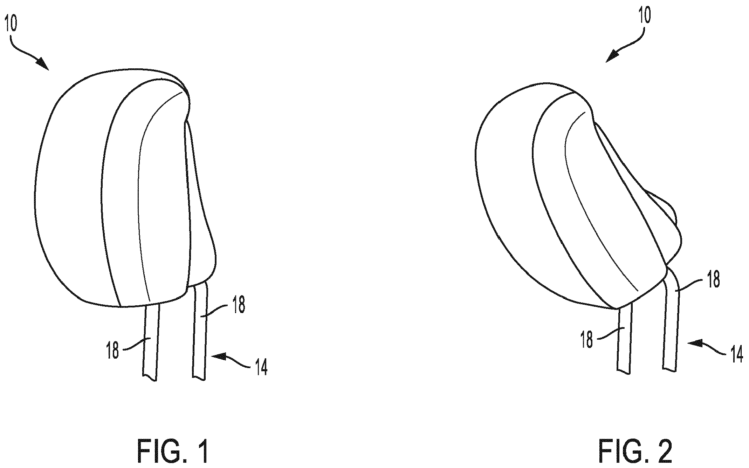

Referring FIGS. 1 and 2, a head restraint assembly 10 is schematically depicted. The head restraint assembly 10 includes a base portion 14 that is mountable to a vehicle seat (not shown) and, more specifically, to the upper portion of the seatback of the vehicle seat. In the illustrated embodiment, the base portion 14 includes two post members 18 that are mounted, or mountable, to the top of the seatback of the vehicle seat, as understood by those skilled in the art. Each of the post members 18 extends into a respective hole formed in the top of the seatback to attach the head restraint assembly 10 to the vehicle seat.

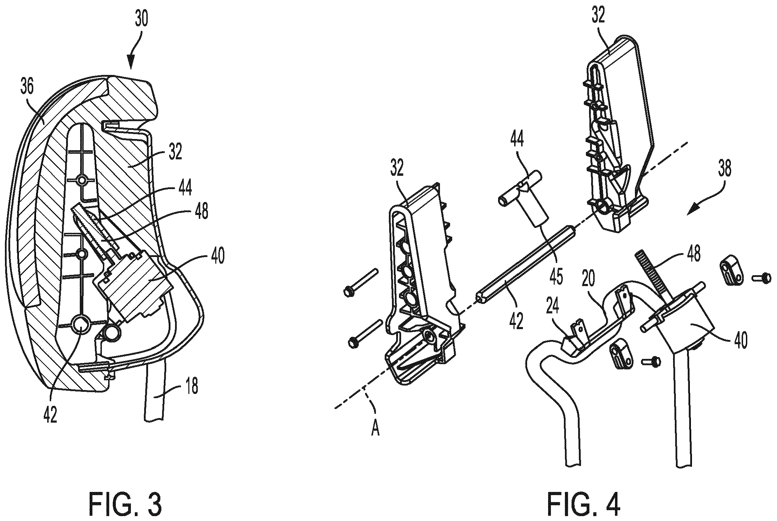

Referring now to FIGS. 3-6, the head restraint assembly 10 further includes a head restraint 30 mounted with respect to the base portion 14. The head restraint 30 includes one or more frame members 32 that are part of a frame assembly (or housing) which provides rigid structure to the head restraint 30 and partially encloses a number of components, as will be described in detail below (FIGS. 3-6). The head restraint 30 also includes a cushion and a head restraint cover 36 that are mounted with respect to the frame assembly for movement therewith. The head restraint cushion is comprised of a soft foam material or a like material to provide a cushion between the head of a human occupant of the vehicle seat and the frame assembly. Exemplary cover materials include cloth, vinyl, leather, etc.

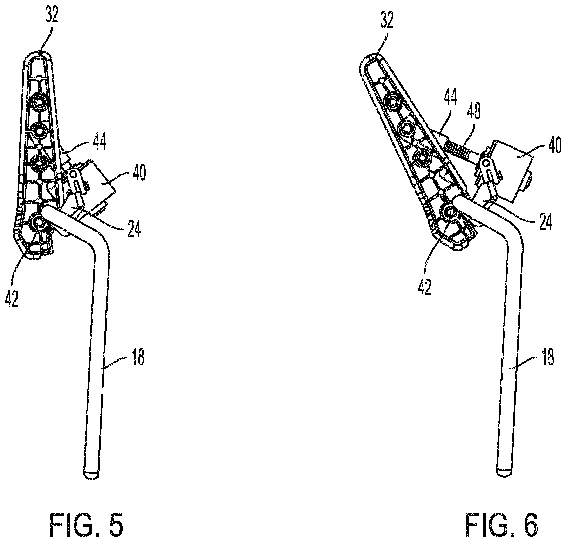

The base portion 14 includes post members 18 and a cross member portion 20 connecting the post members 18. The cross member portion may include multiple segments, as shown in the illustrated embodiment of FIG. 4. As will be appreciated from the description herein, the head restraint 30 is selectively rotatable, or "tiltable" about an axis A, as desired by a user, with the tilting motion driven by electric power. In particular, the head restraint 30 may be tilted between, and over a range of, rotational angles defined by a first position (FIGS. 1 and 5) and a second position (FIGS. 2 and 6). In some embodiments, the angular range of movement between the first and second positions ranges from about 25 degrees to about 35 degrees. In one embodiment, the angular range of movement between the first and second positions is about 28 degrees.

Various embodiments of the head restraint assembly 10 include other types of motion, either via electrically powered adjustment or manual adjustment. For example, the head restraint 30 may be vertically adjustable or not vertically adjustable. In a vertically adjustable embodiment, manual adjustment may be facilitated with a push button that selectively engages and disengages with vertical retention features, such as notches, protrusions, etc. Alternatively, a motor may be included in the seatback or head restraint assembly 10 that adjusts the head restraint 30 in an electrically powered manner.

FIGS. 3-6 illustrate the head restraint assembly 10 with the cover 36 removed to illustrate various components, including a power actuation assembly 38. The power actuation assembly 38 includes a motor mounting structure operatively coupled to the cross member portion 20 of the base portion 14. An electric motor 40 is fixed relative to the base portion 14 by coupling the motor 40 to the motor mounting structure 24. A cross bar 42 connects two side frame members 32 and provides axis A for the head restraint 30 to rotate/tilt about. A T-nut 44 also connects the side frame members 32 with two laterally extending tubes or shafts 43. The T-nut 44 also includes an aperture 45 with a threaded inner surface that is in threaded engagement with a threaded output shaft 48 of the motor 40.

The power actuation assembly 38 tilts the head restraint 30 over an angular range of positions in an electrically powered manner. In particular, the motor 40 is operatively coupled to the frame members 32 via the tubes or shafts 43 of the T-nut 44 to drive the head restraint 30 to a desired tilted position. In particular, the motor 40 has an output that extends therefrom. The output includes the threaded output shaft 48 integrally formed thereon, or coupled thereto. The T-nut 44 is engaged with the threaded output shaft 48 and is coupled or engaged to the side frame members 32, as described above. The motor 40 drives rotation of the threaded output shaft 48 to translate the T-nut 44 therealong, thereby resulting in tilting motion of the head restraint 30 due to the relative angular orientation of the threaded output shaft 48 and the frame members 32 that are driven by translation of the T-nut 44.

In some embodiments, the motor 40 is a DC programmable motor, such as a stepper motor or the like with counters that precisely positions the head restraint to a pre-set position upon command from a user. For example, one or more pre-set head restraint positions may be available to a user in a vehicle based on the electrically powered actuation provided by the power actuation assembly 38. Advantageously, minimal effort is required to tilt the head restraint 30 in an electrically powered manner. Although the tilting adjustment is done electrically with the power actuation mechanisms, adjustment of the head restraint 30 during normal operating conditions is referred to as "manual adjustment" of the head restraint 30.

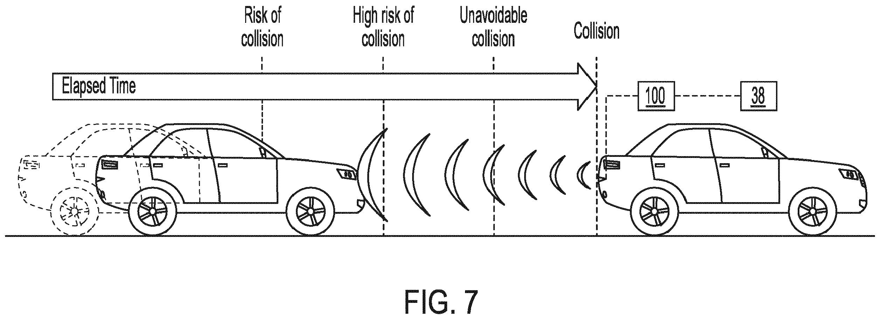

Referring now to FIG. 7, the programmable motor 40, which powers adjustment of the head restraint 30, is a programmable motor that is in operative communication with an impact detection system 100, either directly or indirectly via a system controller. The impact detection system 100 is configured to detect imminent collisions via sensors, RADAR, imaging devices, or any other detection devices. In the illustrated embodiment, the impact detection system 100 is a rear impact detection system, but it is to be appreciated that a frontal and/or side detection system may be employed as an alternative to, or in conjunction with, the rear impact detection system.

Upon detection of a probable vehicle collision by the impact detection system 100, the motor is actuated to automatically deploy the head restraint 30 from the first position (FIGS. 1 and 5) to a second, deployed position (FIGS. 2 and 6). It is to be appreciated that the first position may represent any starting position that the head restraint 30 is disposed at. In other words, the first position does not necessarily represent an extreme rotational position of the range of rotational positions of the head restraint 30, although this may be a contemplated first position.

Automated deployment to the second, deployed positon is performed at a rapid speed that is faster than the adjustment movement that is performed during normal adjustment by a user or during adjustment to a programmed driver preferred position. In particular, adjustment during the normal operating conditions described above involves movement at a first motor speed. However, rapid deployment in response to a detected imminent impact occurs at a second motor speed that exceeds the first speed. This rapid deployment moves the head restraint 30 to the second, deployed position over a time period that allows the head restraint 30 to be positioned in the second, deployed position prior to - or concurrently with - the impact event, or as close to the second, deployed positon as possible. In some embodiments, the second, faster speed achieves tilting movement that provides about 40 millimeters of movement in the fore-aft direction of the vehicle in about 1 second, while normal movement at the first motor speed achieves tilting movement of about 10 millimeters of tilting movement that provides about 10 millimeters of movement in the fore-aft direction of the vehicle in about 1 second. The examples of head restraint movement speed are merely illustrative and it is to be appreciated that other speeds may be utilized in various applications.

The programmable nature of the motor 40 allows such customization. The motor 40 is programmed to respond with actuation of the head restraint 30 at a speed that is determined by an input command. Specifically, an input command associated with the normal operating conditions described above is responded to with movement at the first speed, while an input command associated with a detected impact is responded to with movement at the second, faster speed.

If no actual collision occurs in response to the perceived threat detected by the impact detection system 100, the head restraint 30 may simply be adjusted back to a driver preferred position at the first speed, without the need for manual resetting of internal components or mechanisms of the head restraint, as required by more complicated head restraint deployment systems.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A power actuated tilting head restraint assembly comprising:
a head restraint mountable to a vehicle seat; and
a power actuation assembly including an electric motor to adjust a rotational position of the head restraint, the electric motor programmed to adjust the rotational position at a first speed during manual adjustment of the head restraint and at a second speed upon detection of an imminent impact by an impact detection system, the second speed greater than the first speed.

2. The assembly of claim 1, wherein the power actuation assembly rotates the head restraint forwardly at the second speed upon detection of the imminent impact.

3. The assembly of claim 1, wherein the head restraint is rotatable over a range of rotational positions, the head restraint moved to a forward-most position of the range of rotational positions upon detection of the imminent impact.

4. The assembly of claim 1, wherein the impact detection system is a rear impact detection system.

5. The assembly of claim 1, wherein the impact detection system is a frontal impact detection system.

6. The assembly of claim 1, wherein the electric motor is a stepper motor.

7. The assembly of claim 1, further comprising:
a pair of side frame members laterally spaced from each other and connected to each other with a cross bar, the head restraint rotatable about an axis of the cross bar; and
a threaded output shaft extending from the electric motor and operatively coupled to the side frame members, wherein rotation of the threaded output shaft rotates the head restraint.

8. The assembly of claim 7, wherein the threaded output shaft is operatively coupled to the pair of side frame members with a T-nut.

9. The assembly of claim 1, further comprising a base assembly having a cross member portion connecting a pair of post members, the electric motor operatively coupled to the cross member portion with a motor mounting structure.

10. The assembly of claim 1, wherein the head restraint is rotatable over a range of 25 degrees to 35 degrees.

11. The assembly of claim 1, wherein the first speed of the electric motor rotates the head restraint to move the head restraint forward at a rate of 10 millimeters/second.

12. The assembly of claim 1, wherein the second speed of the electric motor rotates the head restraint to move the head restraint forward at a rate of 40 millimeters/second.

13. A method of automatically deploying a power actuated tilting head restraint assembly comprising:
monitoring surroundings of a vehicle with an impact detection system;
determining an imminent impact with the impact detection system; and
automatically adjusting a rotatable head restraint with an electric motor at a actuation speed that is greater than a manual adjustment speed of the electric motor.

14. The method of claim 13, further comprising resetting the head restraint to a desired rotatable position at the manual adjustment speed after deployment.

15. The method of claim 13, wherein automatically adjusting the head restraint comprises rotating a threaded output shaft extending from the electric motor to translate a T-nut that is operatively coupled to a pair of side frame members of the head restraint.
